# EUROPEAN PATENT APPLICATION

(11) **EP 1 249 652 A1**
(43) Date of publication of application: **16.10.2002**
(21) Application number: 02006234.5
(22) Date of filing: 20.03.2002
(51) Int. Cl.: F16L 3/08, F16L 3/233, F16L 3/24

(54) **Plastic fixing band**

(30) Priority: 11.04.2001 IT TO010352
(71) Applicant: FIAT AUTO S.p.A., 10135 Torino (IT)
(72) Inventor: Cusano, Goffredo, 80147 Napoli (IT)
(74) Representative: Di Francesco, Gianni

(57) **Abstract**

Plastic band to fix elongated elements on a part of the bodywork of a motor vehicle provided with a hole or a pin, consisting of a head presenting an internal opening for a toothed strip integral to it, said head (7) is provided with means (22), adapted to allow the connection to a multifunctional body that can rotate into at least two positions, and provided with a seat basically cylindrical in shape (13) and with a pin (15) for its connection to the bodywork of the motor vehicle.

## Description

The present invention refers to a plastic fixing band, more in particular a band intended to fix a bundle of elongated elements such as electric wires, tubes or cables of motor vehicles, on parts of the bodywork which are provided with a hole or a pin.

Bands of this type are already known and generally consist of a head portion presenting an internal opening and of a toothed strip which is integral to the head. The strip is adapted to be wrapped around an elongated element and then inserted into the opening in the head, where one or more teeth are provided said teeth becoming engaged to the teeth of the strip, so that the strip itself is retained.

The head of these bands generally presents a cylindrical seat provided with internal teeth adapted to retain it on a pin, or a cylindrical protuberance with a pair of external teeth adapted to be snap inserted into a hole. Both the hole and the pin can be made on any part of the bodywork of the motor vehicle. The main problem with bands of this type is that whenever both types of the bands are used at the working site, it is necessary to choose between the two types of bands. This means that two different containers for the bands are necessary at the assembly line when both types of bands are used.

It is an object of the present invention to provide a band that can be mounted indifferently on a hole or on a pin by means of simple adaptation.

Said object is achieved by means of a band adapted to fix elongated elements on a part of the bodywork of a motor vehicle provided with a hole or a pin and presenting the characteristics set forth in claim 1.

Additional advantages and characteristics will become clear from the following description referring to the appended drawings provided as non-restrictive example, and in which:

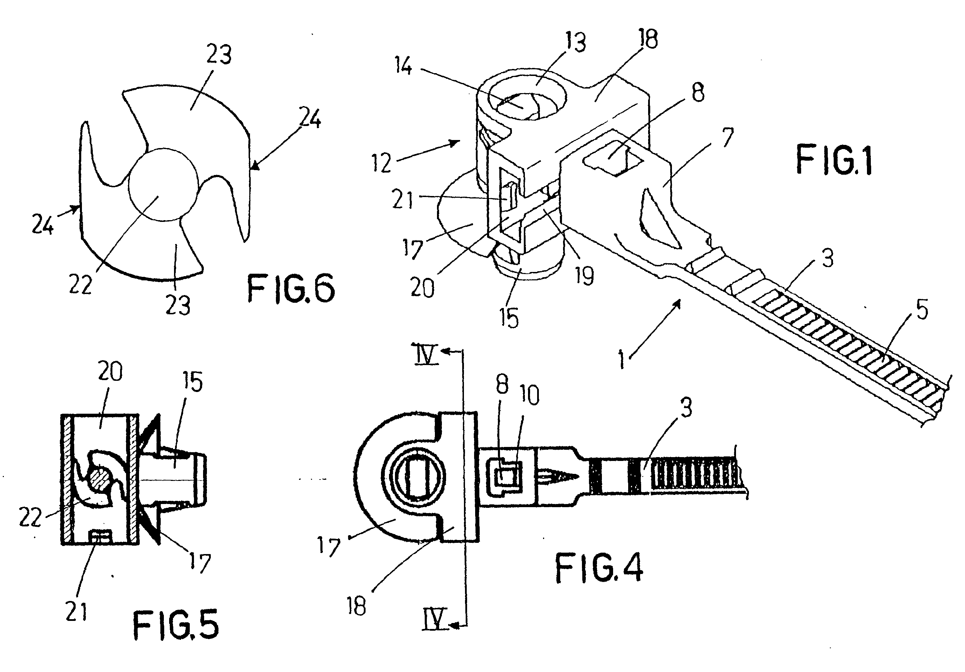

figure 1 is a partial perspective view of a band according to the invention;
figures 2 and 3 are side views of a band according to the invention in two operational positions;
figure 4 is a plant partial view of the band in figure 1;

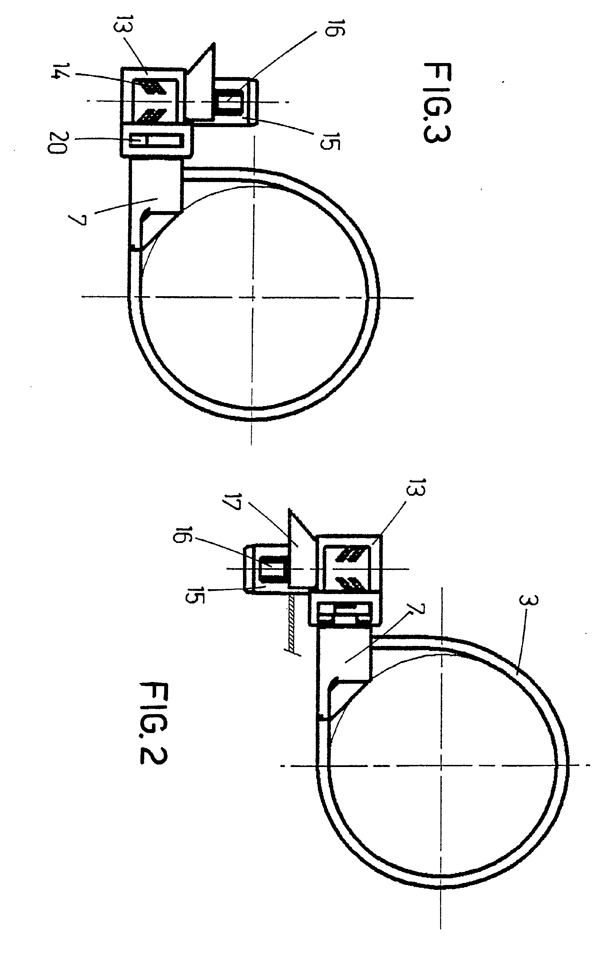

figure 5 is a section view along the line IV-IV in figure 4, and
figure 6 is a magnified plant view of a detail of the band in figure 1.

With reference to the figures, reference number 1 indicates a band presenting a plastic strip-shaped elongated body 3 provided with continuous toothing on one of its faces. Integral to the strip there is a head 7, provided with an opening 8 which is wider than the strip 3. Said opening presents internally one or more teeth 10 adapted to couple with the toothing 5 when the strip is inserted into the opening so that it becomes locked inside it (figures 2 and 3).

Connected to the head 7 there is a multifunctional body 12, consisting both of a preferably cylindrical seat 13 provided with teeth 14 adapted to receive and retain a pin or a similar element, and a pin 15 with a snap and rabbet tooth 16 to be inserted into a hole. The body 12 includes also a casing 18 the shape of which is basically that of a rectangular parallelepiped, provided with a notch 19 on one of the larger walls, and forming a seat 20 of the same shape intended to snap house, by means of a tooth 21, a propeller element 22 with at least two blades 23, rotatably integral to the head 7.

The propeller 22 is provided with two basically plane surfaces 24 on part of the external wall of the two blades 23, which are diametrically opposite. Said surfaces are adapted to be in contact with the walls of the seat 20 of the casing 18 as a consequence of the forced rotation of the casing on the propeller 22, so that two stable positions of the casing 18 are defined, the position being reciprocally 180° rotated. The head 7 the element 12 are snap coupled when the propeller 22 is inserted, integral to the head 7, into the seat 20, thanks to the notch 19. In order to modify the engagement system of the band, it will be enough to manually rotate the body 12 on the propeller 22 until the plane surfaces of its blades lay against the walls of the seat 20. In this way it will be really easy to find one of the two correct positions for the body 12 (figure 2 and 3) with no time loss during the assembly. In case more positions are needed, it is obvious that the number of the blades of the propeller 22 can be increased, so that more stop plane surfaces 24 are available. Therefore, in case a third or a fourth type of engagement is wanted the propeller body 22 will present four blades 23, provided with their respective plane parts 24.

In this way, with the band according to the invention it will not be necessary to store the bands separately.

Should the band be used for different purposes and without its connection to a fixed part by means of holes or pins, the body 12 would be useless and could be removed from the head by pressing it till the resistance of the tooth 21 is overcome.

The shape and dimensions of the different components can vary without going beyond the scope of appended claims.

## Claims

1. Plastic band to fix elongated elements on a part of the bodywork of a motor vehicle provided with a hole or a pin, consisting of a head presenting an internal opening for a toothed strip integral to it, **characterised in that** the head (7) is provided with means (22) rotatably integral to it, adapted to allow the connection to a multifunctional body that can rotate into at least two positions, and provided with a seat basically cylindrical in shape (13) and with a pin (15) for its connection to said pin or to said hole the bodywork of the motor vehicle is provided with.

2. Band as claimed in claim 1, **characterised in that** the means adapted to allow the connection of the head (7) to the multifunctional body (12) consist of a propeller body (22) with at least two blades (23) and of a seat (20) the shape of which is basically that of a rectangular parallelepiped, adapted to receive the propeller body (22) and made into a casing (18) which is integral to said multifunctional body (12).

3. Band as claimed in claim 2, **characterised in that** the propeller body (22) is snap inserted into the seat (29) by means of a notch (19) and of a tooth (21) on the walls of the casing (18).

4. Band as claimed in claim 1 and 2, **characterised in that** a part of the surface (24) of the external faces of the blades (23) is basically plane and adapted to lay against the wall of the seat (20).

5. Band as claimed in claim 1 and 2, **characterised in that** the blades (23) of the propeller body (4) are at least four.
